# EUROPEAN PATENT APPLICATION

(11) **EP 4 044 539 A1**
(43) Date of publication of application: **17.08.2022**
(21) Application number: 19948528.5
(22) Date of filing: 10.10.2019
(51) Int. Cl.: H04L 27/26

(54) **TERMINAL AND WIRELESS COMMUNICATION METHOD**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP); HARADA, Hiroki, Tokyo 100-6150 (JP); YOSHIOKA, Shohei, Tokyo 100-6150 (JP)
(74) Representative: Hoffmann Eitle
(86) International application number: PCT/JP2019/040076
(87) International publication number: WO 2021/070337

(57) **Abstract**

A terminal according to an aspect of the present disclosure includes: a control section that determines at least one of Comb configuration and sequence of a measurement reference signal (SRS) based on whether a frequency of a cell to be configured is included in a specific frequency range; and a transmitting section that transmits the SRS. According to an aspect of the present disclosure, at least one of the configuration and sequence of the SRS can be appropriately determined even when a relatively high FR is used.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (3rd generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In an existing LTE system (for example, LTE Rel. 8 - 15), a user terminal (user equipment (UE)) transmits an uplink signal. The uplink signal may include, for example, at least one of a random access channel (physical random access channel (PRACH)), an uplink shared channel (physical uplink shared channel (PUSCH)), an uplink control channel (physical uplink control channel (PUCCH)), a sounding reference signal (SRS), and a demodulation reference signal (DM-RS) of a PUSCH or a PUCCH.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In a future wireless communication system (for example, NR after Rel. 16), it is considered to use a frequency range (FR) (for example, it may be referred to as FR4.) higher than a certain frequency (for example, 52.6 GHz) .

However, as the frequency used is higher, power amplifier (PA) performance (for example, maximum power and efficiency) decreases. In such a case, transmission power of the SRS in a relatively high FR (for example, a frequency range higher than FR2, FR4) may be limited.

When the transmission power of the SRS is limited, there is a possibility that power per resource element (RE) to which the SRS is mapped becomes small. In addition, when the transmission power of the SRS is limited, there is a possibility that a peak-to-average power ratio (PAPR) needs to be reduced in order to narrow an operation area of the PA. In such a case, communication quality may deteriorate.

Therefore, an object of the present disclosure is to provide a terminal and a radio communication method capable of appropriately determining at least one of the configuration and sequence of the SRS even when a relatively high FR is used.

### Solution to Problem

A terminal according to an aspect of the present disclosure includes: a control section that determines at least one of Comb configuration and sequence of a measurement reference signal (SRS) based on whether a frequency of a cell to be configured is included in a specific frequency range; and a transmitting section that transmits the SRS.

### Advantageous Effects of Invention

According to an aspect of the present disclosure, at least one of the configuration and sequence of the SRS can be appropriately determined even when a relatively high FR is used.

### Brief Description of Drawings

Figs. 1A and 1B are diagrams illustrating examples of a correspondence relationship in transmissionComb replacement in FR4.
Fig. 2 is a diagram illustrating an example of an SRS RE having configurations of Comb6, Comb8, and Comb12.
Figs. 3A and 3B are diagrams illustrating examples of cell coverage by transmission and reception points and allocation of group numbers in accordance with a difference in frequency range.
Fig. 4 is a diagram illustrating an example of a schematic configuration of a radio communication system according to one embodiment.
Fig. 5 is a diagram illustrating an example of a configuration of a base station according to the embodiment.
Fig. 6 is a diagram illustrating an example of a configuration of a user terminal according to the embodiment.
Fig. 7 is a diagram illustrating an example of a hardware configuration of the base station and the user terminal according to the embodiment.

### Description of Embodiments

### (SRS)

In the NR, a measurement reference signal (sounding reference signal (SRS)) has a wide range of usages. The SRS of NR is used not only for channel state information (CSI) measurement of UL which is also used in an existing long term evolution (LTE Rel. 8-14) but also for CSI measurement of DL, beam management, and the like.

In the UE, one or a plurality of SRS resources may be configured. The SRS resource may be specified by an SRS resource indicator (SRI).

In the UE, one or a plurality of SRS resource sets may be configured. One SRS resource set may be associated with a given number of SRS resources. The UE may commonly use a higher layer parameter for the SRS resources included in one SRS resource set. Note that, in the present disclosure, the resource set may be read as a resource group, simply a group and the like.

At least one of information regarding the SRS resource set and the SRS resource may be configured in the UE using the higher layer signaling, physical layer signaling, or a combination thereof.

The higher layer signaling may be, for example, any of RRC (Radio Resource Control) signaling, MAC (Medium Access Control) signaling, broadcast information and so on, or a combination thereof.

For example, a MAC control element (CE), a MAC protocol data unit (PDU), or the like may be used for the MAC signaling. The broadcast information may be, for example, a master information block (MIB), a system information block (SIB), remaining minimum system information (RMSI), other system information (OSI), and the like.

The physical layer signaling may be, for example, downlink control information (DCI).

The SRS configuration information (for example, an RRC parameter (information element) "SRS-Config") may include SRS resource set configuration information, SRS resource configuration information, and the like.

The SRS resource set configuration information (e.g., the RRC parameter "SRS-ResourceSet") may include information on an SRS resource set identifier (ID) (SRS-ResourceSetId), a list of SRS resource IDs (SRS-ResourceId) used in the resource set, an SRS resource type, and SRS usage.

Here, the SRS resource type may indicate any of (Periodic SRS (P-SRS), semi-persistent SRS (SP-SRS), and aperiodic CSI (A-SRS, AP-SPS). Note that the UE may transmit a P-SRS and an SP-SRS periodically (or periodically after activated), and transmit an A-SRS based on an SRS request in the DCI.

Further, the SRS usage (the RRC parameter "usage" or the Layer-1 (L1) parameter "SRS-SetUse") may be, for example, beam management, codebook (CB), noncodebook (NCB), antenna switching, or the like. SRS used for the codebook or the non-codebook may be used to determine a precoder for codebook-based or non-codebook-based PUSCH transmission based on SRI.

For an SRS used for beam management, it may be assumed that only one SRS resource per SRS resource set can be transmitted at a predetermined time instant. When different SRS resources belong to different SRS resource sets, these SRS resources may be transmitted at the same time.

For example, in the case of codebook based transmission, the UE may determine the precoder for PUSCH transmission based on SRI, transmitted rank indicator (TRI) and transmitted precoding matrix indicator (TPMI). For the non-codebook based transmission, the UE may determine a precoder for PUSCH transmission based on the SRI.

The SRS resource configuration information (for example, an RRC parameter "SRS-Resource") may include an SRS resource ID (SRS-ResourceId), the number of SRS ports, an SRS port number, transmission Comb, SRS resource mapping (for example, at least one resource position of time and frequency, resource offset, resource periodicity, the repeat number, the number of SRS symbols, an SRS bandwidth and the like), hopping relation information, the SRS resource type, a sequence ID, spatial relation information, and the like.

The UE may transmit the SRS in adjacent symbols as many as the SRS symbols out of last six symbols in one slot. The number of SRS symbols may be one, two, or four, for example.

The UE may switch bandwidth parts (BWPs) to transmit an SRS or may switch antennas slot by slot. Furthermore, the UE may apply at least one of in-slot hopping and inter-slot hopping to the SRS transmission.

The sequence of SRS may be a low peak-to-average power ratio (PAPR) sequence. The transmission Comb quantity K_{TC} may be included in the higher layer parameter (For example, transmissionComb).

The low PAPR sequence may be a Constant Amplitude Zero Auto Correlation (CAZAC) sequence or a sequence conforming to CAZAC sequence (for example, a computer-generated sequence (CGS)). The CGS may be stipulated in a specification (For example, a table).

As the SRS transmission Comb, interleaved frequency division multiple access (IFDMA) may be applied using Comb2 (SRS of 1 resource element (RE, subcarrier) is arranged for every two REs) or Comb4 (SRS of 1 RE is arranged for every 4 REs) and a cyclic shift (CS).

In a Comb configuration with Comb value = n, the Comb offset may take any value of integers from 0 to n-1. The configuration of Comb2 (Comb value = 2) may take any value of Comb offset = {0, 1}. The configuration of Comb4 (Comb value = 4) may take any value of Comb offset = {0, 1, 2, 3}.

In the present disclosure, the Comb offset, the Comb index, and the transmission Comb offset may be replaced with each other.

In the case of Comb2, the CS may take any value of {0, 1, 2, 3, 4, 5, 6, 7} for a cyclic shift (CS) number (CS index) n_{SRS}^{cs,i} for the antenna port pᵢ. In the case of Comb4, the CS number n_{SRS}^{cs,i} for the antenna port pᵢ may take any value of {0, 1, 2, 3, 4, 5, 6, 7, 8, 9, 10, 11}. The value αᵢ of CS for the antenna port pᵢ is given as 2πn_{SRS}^{cs,i}/n_{SRS}^{cs,max} using the CS number n_{SRS}^{cs,i} and the maximum number of CS numbers n_{SRS}^{cs,max} = 12. When Comb2 and CS are used, a maximum of 2 × 8 = 16 UEs can be multiplexed. When Comb4 and CS are used, a maximum of 4 × 12 = 48 UEs can be multiplexed. A plurality of CSs may be configured in different UEs or associated with different SRS ports.

The transmission CombX (where X may be 2, 4, or the like) of the SRS may be configured in the UE by the "transmissionComb = nX" which is an RRC parameter. For example, the transmission Comb4 is configured as transmissionComb = n4.

In addition, the Comb offset may be configured in the UE by "combOffset-nX" which is an RRC parameter. For example, in the case of combOffset-n4, one of Comb offset = {0, 1, 2, 3} of Comb4 is configured.

Further, the CS index candidate may be configured in the UE by "cyclicShift-nX" which is an RRC parameter. For example, in the case of cyclicShift-n4, the candidate of the CS index of Comb4 is one of {0, 1, 2, 3, 4, 5, 6, 7, 8, 9, 10, 11}.

The UE in which the transmissionComb = nX is configured has combOffset-nX and cyclicShift-nX configured in the same X.

### (Frequency Range)

In Rel. 15 NR, it has been studied to use a frequency range (FR) up to 52.6 GHz. In NR after Rel. 16, it is considered to use a frequency band above 52.6 GHz. The frequency range may be appropriately paraphrased as a frequency band.

A frequency band higher than 52.6 GHz may be referred to as FR4. FR4 may be, for example, 52.6 GHz to 114.25 GHz. As frequency ranges in the existing Rel. 15 NR, FR1 is 410 MHz to 7.152 GHz, and FR2 is 24.25 GHz to 52.6 GHz. FR4 may also be referred to as FRX (X is an arbitrary character string).

In the FR4, it is assumed that a phase noise increases and a propagation loss increases. In addition, a problem of having high sensitivity with respect to nonlinearity of a peak-to-average power ratio (PAPR) and a power amplifier (PA) is assumed.

In consideration of the above-described matters, in FR4 (or the waveform for FR4), it is conceivable to use Cyclic Prefix-Orthogonal Frequency Division Multiplexing (CP-OFDM), Discrete Fourier Transform Spread OFDM (DFT-s-OFDM), and the like to which a subcarrier spacing (SCS) wider than Rel. 15 NR is applied. For example, in FR4, it is considered to use a SCS (for example, 240 kHz, 480 kHz, or 960 kHz) wider than 15 kHz to 120 kHz defined by Rel. 15 NR.

Further, in Rel. 15, a DL channel (for example, a downlink control channel (PDCCH) or the like) is designed based on an OFDM waveform, but it is also assumed that a channel design based on a single carrier is considered in a frequency band higher than 52.6 GHz.

Incidentally, as in FR4, it is known that the higher the frequency used, the lower the PA performance (for example, maximum power and efficiency). In such a case, the transmission power of the SRS in the relatively high FR may be limited.

If the transmission power of the SRS is limited, the power per RE mapping the SRS may be reduced. In addition, if the transmission power of the SRS is limited, there is a possibility that the PAPR needs to be reduced in order to narrow the operation area of the PA.

In such a case, if the UE cannot appropriately determine the configuration and sequence of the SRS, the communication quality may deteriorate.

Therefore, the present inventors conceived a method for appropriately determining at least one of the configuration and sequence of the SRS when using a relatively high FR (for example, a frequency range higher than FR2).

Hereinafter, embodiments according to the present disclosure will be described in detail with reference to the drawings. Radio communication methods according to respective embodiments may be applied individually or in combination.

### (Radio Communication Method)

In the present disclosure, an FR mode, a configured FR, an FR configuration, an enabled FR, and the like may be replaced with one another.

In the present disclosure, a group number, a group index, a sequence set number, a sequence set index, and the like may be replaced with one another.

In the present disclosure, the frequency ranges 4 and FR4, a relatively high frequency range, and a specific frequency range may be replaced with one another.

In the present disclosure, the frequency range 1, the frequency range 2, the frequency ranges 3, FR1, FR2, and FR3, and the frequency ranges other than the specific frequency ranges may be replaced with one another.

### <Embodiment 1>

In a first embodiment, when a cell that uses a frequency (frequency band) included in a relatively high frequency range (for example, FR4) is configured for the UE, how the UE determines the configuration of the SRS will be described.

Note that "a cell that uses a frequency included in a relatively high frequency range is configured for the UE" in the present disclosure may be replaced with "the UE uses a relatively high frequency range", "the frequency range of the UE is configured relatively high", or the like.

The "relatively high frequency range" of the present disclosure may be predefined in the specification. In each embodiment of the present disclosure, the "relatively high FR" will be described assuming FR4, but is not limited thereto. The "relatively high FR" in the present disclosure may be replaced with "a certain FR", and may be, for example, an FR having values higher than FR2, 52.6 GHz to 114.25 GHz, or a frequency band using frequencies higher than 114.25 GHz.

The "relatively high FR (specific frequency range)" may be FR1, FR2, FR3, or the like. The frequency ranges other than the specific frequency range may be FR4 or the like.

The FR used by the UE may be configured in the UE by higher layer signaling (for example, RRC signaling), physical layer signaling (for example, DCI), or a combination thereof. For example, the UE in which a certain FR mode is configured may determine the FR to be used on the basis of the FR mode. The UE configured with FR mode = FR4 by RRC signaling may determine to use a relatively high frequency range.

The FR to be used by the UE may be implicitly notified to the UE by the SCS used by the UE. For example, if the SCS is greater than or equal to a certain value (for example, 240 kHz), the UE may assume that FR4 is configured.

### <<Embodiment 1-1>>

When a cell using frequencies (frequency band) included in a relatively high frequency range (for example, FR4) is configured for the UE, the UE may assume that a value of the transmissionComb that is an RRC parameter is limited to a certain value (for example, n4).

For example, if a cell using a frequency included in FR4 is configured for the UE, the UE may assume that only the transmissionComb = n4 is configured.

In addition, for example, if a cell using a frequency included in FR4 and transmissionComb = n2 is configured for the UE, combOffset-n2 may be replaced with combOffset-n4 and cyclicShift-n2 may be replaced with cyclicShift-n4. When performing this replacement, the UE may determine at least one of the value of combOffset-n4 and the value of cyclicShift-n4 after the replacement based on at least one of the value of combOffset-n2 and the value of cyclicShift-n2.

For example, if the value of cyclicShift-n2 is an even number, the UE may directly replace the value of combOffset-n2 with the value of combOffset-n4. If the value of cyclicShift-n2 is an odd number, the UE may replace the value of combOffset-n4 with a value obtained by adding a specific number (for example, 2) to the value of combOffset-n2.

According to Embodiment 1-1, it is not necessary for the UE to receive a signal for notifying switching of the transmissionComb, and it is possible to suppress an increase in the number of REs in the frequency domain of the SRS, and secure power per RE.

### <<Embodiment 1-2>>

When a cell using a frequency (frequency band) included in a relatively high frequency range (for example, FR4) is configured for the UE, the UE may assume that transmissionComb = Y for a value of transmissionComb that is an RRC parameter.

For example, when a cell using a frequency included in FR4 is configured for the UE, the UE may assume that transmissionComb = Y (for example, Y = n6, n8, n12), which is not used in an existing system (Rel. 15 NR), is configured. The value Y of transmissionComb may be 12 or more. Among transmissionComb not used in the existing system (Rel. 15 NR), transmissionComb = n6, n8, and n12 will be described in detail in Embodiment 1-3 described later.

Here, Y may be notified to the UE by RRC signaling, or may be defined in advance in the specification.

When a cell using a frequency included in a relatively high frequency range (for example, FR4) is configured for the UE, the UE may assume that a minimum value of the number of physical resource blocks (PRBs) for the configured SRS is a N_{PRB} (for example, N_{PRB} = 3). The N_{PRB} may be notified to the UE by RRC signaling, or may be defined in advance in the specification.

The UE may assume that the number of configured PRBs of SRS is N_{PRB} or more, and may assume that the SRS whose number of PRBs is less than N_{PRB} is not configured.

In addition, when an SRS whose number of PRBs is less than N_{PRB} is configured, the UE may assume that a base sequence different from that of the SRS whose number of PRBs is N_{PRB} or more is used for generation of the sequence of the SRS. For example, when an SRS whose number of PRBs is N_{PRB} or more is configured, the UE may assume a sequence used when the base sequence length is 36 or more, and an SRS whose number of PRBs is less than N_{PRB} is configured, the UE may generate the sequence of SRS assuming a sequence used when the base sequence length is less than 36.

In addition, the UE configured with a cell using a frequency included in FR4 and transmissionComb = Z (for example, Z = n2, n4) may replace combOffset-Z with combOffset-Y and replace cyclicShift-Z with cyclicShift-Y. When performing this replacement, the UE may determine at least one of the value of combOffset-Z and the value of cyclicShift-Z after the replacement based on at least one of the value of combOffset-Y and the value of cyclicShift-Y.

For example, if the value of cyclicShift-Z is an even number (or odd number), the UE may directly replace the value of combOffset-Z with the value of combOffset-Y. If the value of cyclicShift-Z is an odd number (or even number), the UE may replace the value of combOffset-Z with a value obtained by adding a specific value to the value of combOffset-Y.

For example, if a cell using a frequency included in FR4 is configured for the UE, the UE may assume transmissionComb = Y (for example, Y > n4). In this case, even when transmissionComb is configured or not configured for the SRS, the UE may apply transmissionComb = Y to the SRS. In this case, the UE may assume that combOffset-Y, cyclicShift-Y, and the like have respectively predetermined values.

According to Embodiment 1-2, transmissionComb can be flexibly configured in order to secure power per RE.

### <<Modification of Embodiment 1-2>>

When a cell using a frequency (frequency band) included in a relatively high frequency range (for example, FR4) is configured for the UE, the UE may assume that transmissionComb = Y for a value of transmissionComb that is an RRC parameter, based on a certain correspondence relationship.

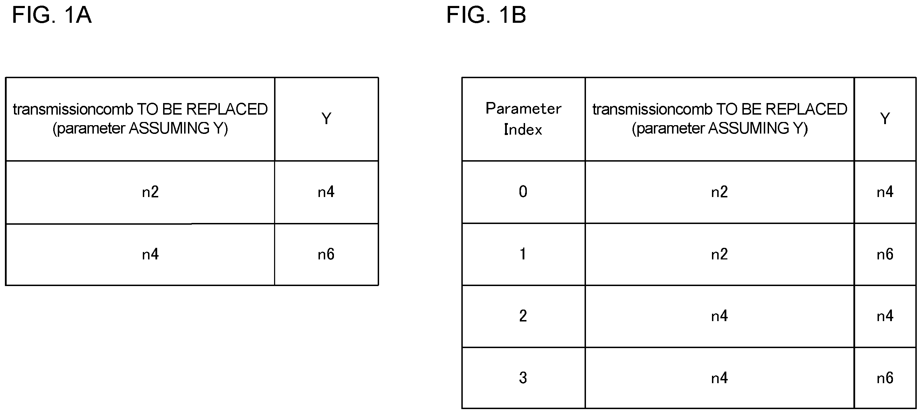

Figs. 1A and 1B are diagrams illustrating examples of a correspondence relationship in transmissionComb replacement in FR4. For example, when a cell using a frequency included in FR4 is configured for the UE, the UE may assume that transmissionComb = Y (for example, Y = n6, n8, n12), which is not used in existing systems (Rel. 15 and earlier releases), is configured, based on the correspondence relationship (table) in Fig. 1A. In the case of Fig. 1A, when transmissionComb = n2 is configured, the UE may assume that transmissionComb = n4 is configured, and when transmissionComb = n4 is configured, the UE may assume that transmissionComb = n6 is configured.

In this case, since the correspondence of replacement for certain transmissionComb is uniquely determined, it is possible to flexibly configure transmissionComb in order to secure power per RE, and use the RRC parameter of the existing system (Rel. 15) as it is.

When a cell using a frequency included in FR4 is configured for the UE, the UE may assume that transmissionComb = Y (for example, Y = n6, n8, n12), which is not used in existing systems (Rel. 15 and earlier releases), is configured, based on the correspondence relationship (table) in Fig. 1B. Here, the parameter index may be notified to the UE by RRC signaling. The parameter index may mean an index for transmissionComb replacement or an index for SRS.

In the case of Fig 1B, the UE notified of the parameter index = 0 may assume that, when transmissionComb = n2 is configured, transmissionComb = n4 is configured. The UE notified of the parameter index = 1 may assume that, when transmissionComb = n2 is configured, transmissionComb = n6 is configured. The UE notified of the parameter index = 2 may assume that, when transmissionComb = n4 is configured, transmissionComb = n4 is configured (in this case, no replacement is performed). The UE notified of the parameter index = 3 may assume that, when transmissionComb = n4 is configured, transmissionComb = n6 is configured.

In this case, since the correspondence relationship for replacement can be changed based on the parameter index, transmissionComb can be configured more flexibly in order to secure power per RE.

Although Fig. 1B illustrates an example in which one value of transmissionComb is replaced for one value of the parameter index, a plurality of values of transmissionComb may be replaced for one value of the parameter index. For example, the UE notified of a certain parameter index may assume that, when transmissionComb = n2 is configured, transmissionComb = n6 is configured, and when transmissionComb = n4 is configured, transmissionComb = n6 is configured.

The derivation of Y may be performed with reference to the table as described above, or may be performed using a function or the like that satisfies the correspondence relationship in the table.

### <<Embodiment 1-3>>

As transmission Comb of the SRS, at least one of Comb6 (the SRS of 1 RE is arranged for each 6 REs), Comb8 (the SRS of 1 RE is arranged for each 8 REs), or Comb12 (the SRS of 1 RE is arranged for each 12 REs) may be newly applied.

The configuration of Comb6 (Comb value = 6) may be configured by transmissionComb = n6. For example, any value of Comb offset = {0, 1, 2, 3, 4, 5} (combOffset - n6 = (0... 5)) can be taken. For example, the CS index n_{SRS}^{cs,i} for the antenna port pᵢ may take any value of {0, 1, 2, 3, 4, 5, 6, 7, 8, 9, 10, 11} (combOffset - n6 = (0... 11)). When Comb6 and CS are used, a maximum of 6 × 12 = 72 UEs can be multiplexed. A plurality of CSs may be configured in different UEs or associated with different SRS ports.

The configuration of Comb12 (Comb value = 12) may be configured by transmissionComb = n12. For example, any value of Comb offset = {0, 1, 2, 3, 4, 5, 6, 7, 8, 9, 10, 11} (combOffset - n12 = (0... 11)) can be taken. For example, the CS index n_{SRS}^{cs,i} for the antenna port pᵢ may take any value of {0, 1, 2, 3, 4, 5, 6, 7, 8, 9, 10, 11} (combOffset - n12 = (0... 11)). When Comb12 and CS are used, a maximum of 12 × 12 = 144 UEs can be multiplexed. A plurality of CSs may be configured in different UEs or associated with different SRS ports.

The configuration of Comb8 (Comb value = 8) may be configured by transmissionComb = n8. For example, any value of Comb offset = {0, 1, 2, 3, 4, 5, 6, 7} (combOffset - n8 = (0... 7)) can be taken. For example, the CS index n_{SRS}^{cs,i} for the antenna port pᵢ may take any value of {0, 1, 2, 3, 4, 5, 6, 7, 8, 9, 10, 11} (combOffset - n8 = (0... 11)). When Comb8 and CS are used, a maximum of 8 × 12 = 96 UEs can be multiplexed. A plurality of CSs may be configured in different UEs or associated with different SRS ports.

The ranges of combOffset-n6, combOffset-n8, and combOffset-n12 are not limited to 0 to 11. For example, the maximum value may be a value of 12 or more.

If the value X in CombX does not allow the number of REs per RB (for example, 12 REs) to be divisible (for example, X = 8), the UE may limit the number of available PRBs to a certain value (for example, 2n (n = 1, 2, 3, 4,...)). The certain value may be determined such that the number of REs per RB of the certain value can be divided by X.

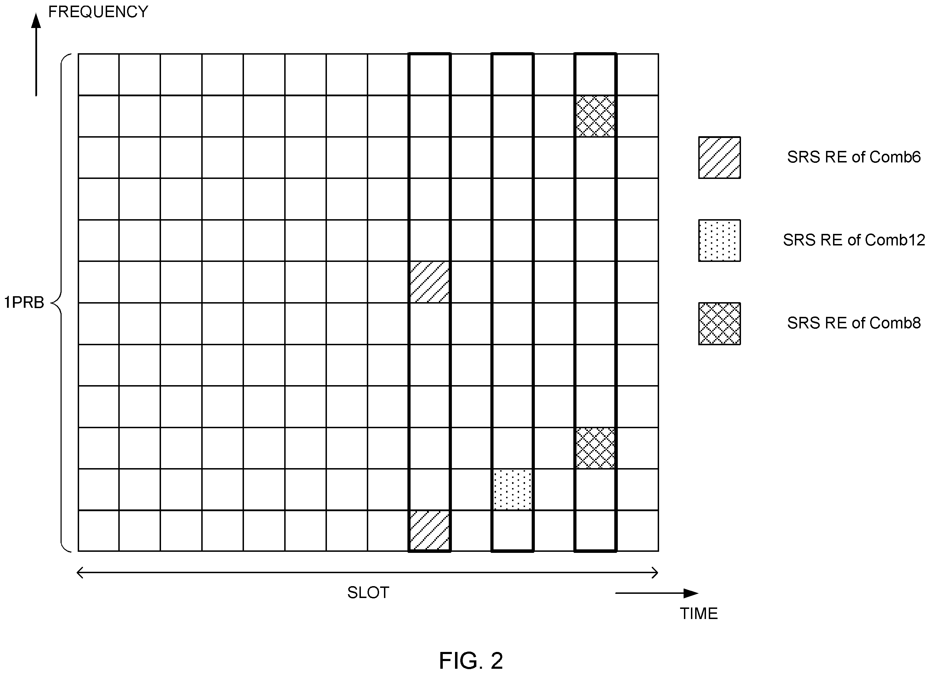

Fig. 2 illustrates SRSs having configurations of Comb6, Comb8, and Comb12.

### <Second Embodiment>

In a second embodiment, when a cell that uses a frequency (frequency band) included in a relatively high frequency range (for example, FR4) is configured for the UE, how the UE determines the sequence of SRS will be described.

### <<Embodiment 2-1>>

When a cell using a frequency (frequency band) included in a relatively high frequency range (for example, FR4) is configured for the UE, the UE may assume a sequence of SRS different from FRX (for example, X = 1, 2, 3) regardless of the configuration by higher layer signaling.

For example, when a cell using a frequency included in FR4 is configured for the UE, the UE may assume that a base sequence is derived by using a sequence table for π/2 BPSK regardless of the configuration by higher layer signaling.

According to Embodiment 2-1, since a PAPR is smaller than that of a sequence in an existing system (Rel. 15), it can also be used for Msg.3 in initial access.

When a cell using a frequency included in a relatively high frequency range (for example, FR4) is configured for the UE, the UE may be configured with a sequence for a sequence of SRS (for example, a sequence for π/2 BPSK) by higher layer signaling.

### <<Embodiment 2-2>>

When a cell using a frequency (frequency band) included in a relatively high frequency range (for example, FR4) is configured for the UE, the UE may assume that a sequence table with a number of groups less than a certain number (for example, 30) is applied to the SRS (in other words, a sequence of SRS is generated based on the table).

For example, when a cell using a frequency included in FR4 is configured for the UE, the UE may assume that a sequence table with a number of groups less than 30 is applied to the SRS.

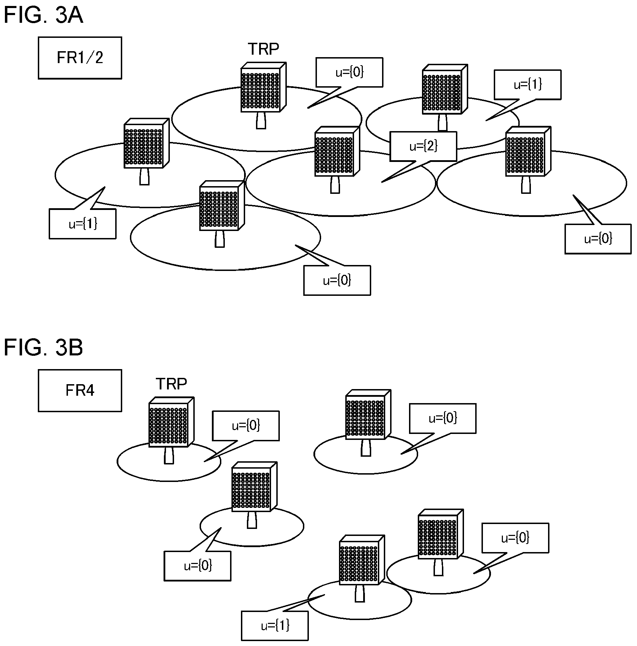

Figs. 3A and 3B are diagrams illustrating examples of cell coverage by transmission and reception points and allocation of group numbers in accordance with a difference in frequency range. Fig. 3A illustrates group numbers allocated to transmission/reception points (TRPs) in FR1 or 2 and cell coverage of each TRP. Fig. 3B illustrates group numbers allocated to TRPs in FR4 and cell coverage of each TRP.

By allocating group numbers different between adjacent cells to the TRPs, the sequence of SRS is prevented from interfering. Compared with the case of applying FR1 or 2, the cell coverage of each TRP in the case of applying FR4 using a high frequency band is narrow. Therefore, even if the number of sequences corresponding to the group numbers is smaller than a certain number, a sequence with a small PAPR can be applied to the SRS.

Switching between the sequence table having 30 groups and the sequence table having fewer than 30 groups may be notified to the UE by RRC signaling, or may be activated or deactivated by the MAC CE.

The UE may assume that switching between the sequence table having 30 groups and the sequence table having fewer than 30 groups is performed according to the waveform used by the UE.

For example, when the waveform used is a CP-OFDM waveform, the UE may assume that the sequence table having 30 groups is applied to the sequence of SRS, and when the waveform used is a DFT-S-OFDM waveform, the UE may assume that the sequence table having fewer than 30 groups is applied to the sequence of SRS. For example, when the waveform used is a CP-OFDM waveform, the UE may assume that the sequence table having fewer than 30 groups is applied to the sequence of SRS, and when the waveform used is a DFT-S-OFDM waveform, the UE may assume that the sequence table having 30 groups is applied to the sequence of SRS.

The UE may assume that switching between the sequence table having 30 groups and the sequence table having fewer than 30 groups is performed according to the number of RBs configured for the SRS.

For example, when the number of RBs configured is less than a certain threshold α, the UE may assume that the sequence table having 30 groups is applied to the sequence of SRS, and when the number of RBs configured is greater than or equal to the certain threshold α, the UE may assume that the sequence table having fewer than 30 groups is applied to the sequence of SRS. When the number of RBs configured is equal to or greater than the certain threshold α, the UE may assume that the sequence table having 30 groups is applied to the sequence of SRS, and when the number of RBs configured is less than the certain threshold α, the UE may assume that the sequence table having fewer than 30 groups is applied to the sequence of SRS.

Here, the threshold α may be notified to the UE by RRC signaling, or may be defined in advance by the specification.

Group number u for fewer than 30 groups may be u ∈ {0, 1, 2,... N} (N is an integer satisfying 1 ≤ N < 30, for example, 14).

According to Embodiment 2-2, a sequence having a relatively small PAPR with a limited number of groups can be applied to the SRS.

The derivation of sequence of SRS may be performed with reference to the table as described above, or may be performed using a function or the like that satisfies the correspondence relationship in the table. In addition, "30" in the present disclosure may be replaced with another value.

### (Radio communication system)

Hereinafter, a configuration of a radio communication system according to one embodiment of the present disclosure will be described. In this radio communication system, communication is performed using any one of the radio communication methods according to the embodiments of the present disclosure or a combination thereof.

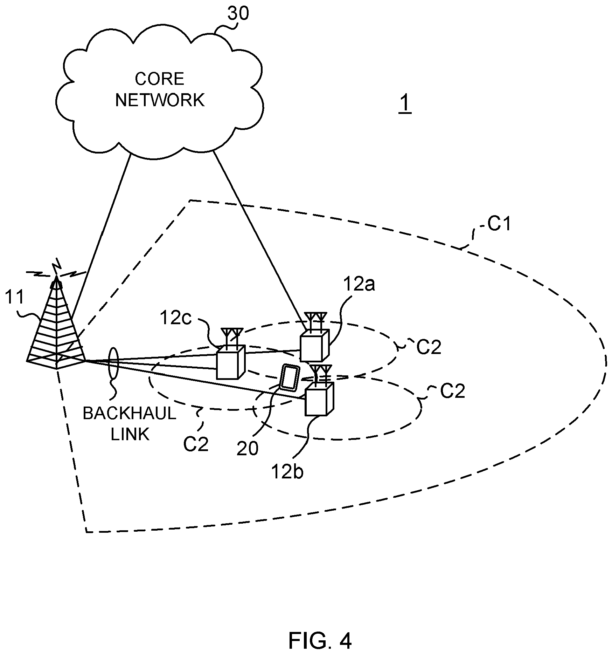

Fig. 4 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by 3rd generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)) .

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

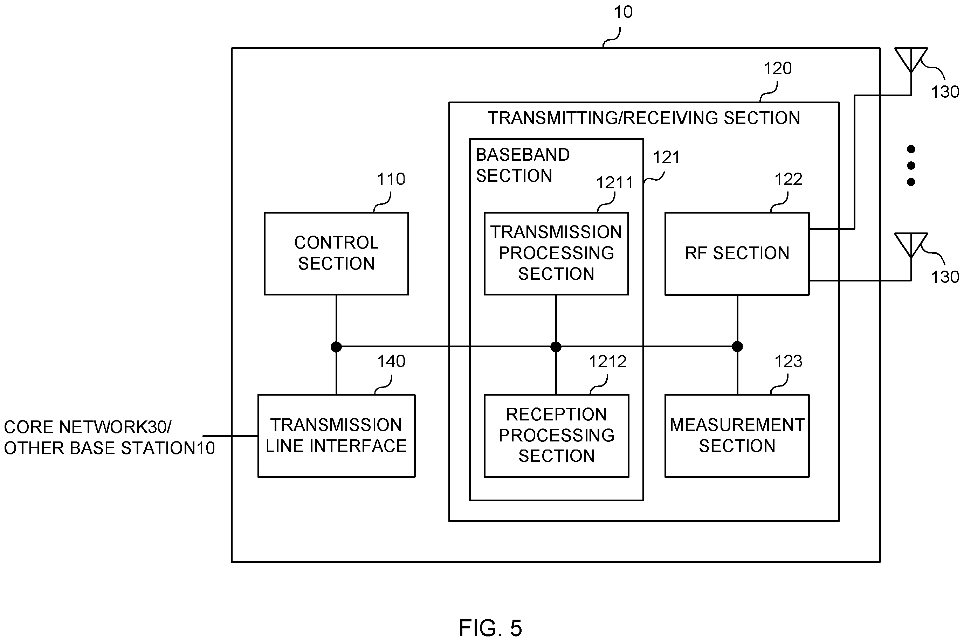

Fig. 5 is a diagram illustrating an example of a configuration of the base station according to an embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a base band circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may include the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal, to acquire user data and the like.

The transmitting/receiving section 120 (measurement section 123) may perform measurement on the received signal. For example, the measurement section 123 may perform radio resource management (RRM), channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be constituted by at least one of the transmitting/receiving section 120, the transmission/reception antenna 130, and the transmission line interface 140.

The control section 110 may perform control to notify the user terminal 20 of the FR used by the user terminal 20 by higher layer signaling (for example, RRC signaling), physical layer signaling (for example, DCI), or a combination thereof.

The transmitting/receiving section 120 can receive the SRS transmitted from the user terminal 20.

### (User Terminal)

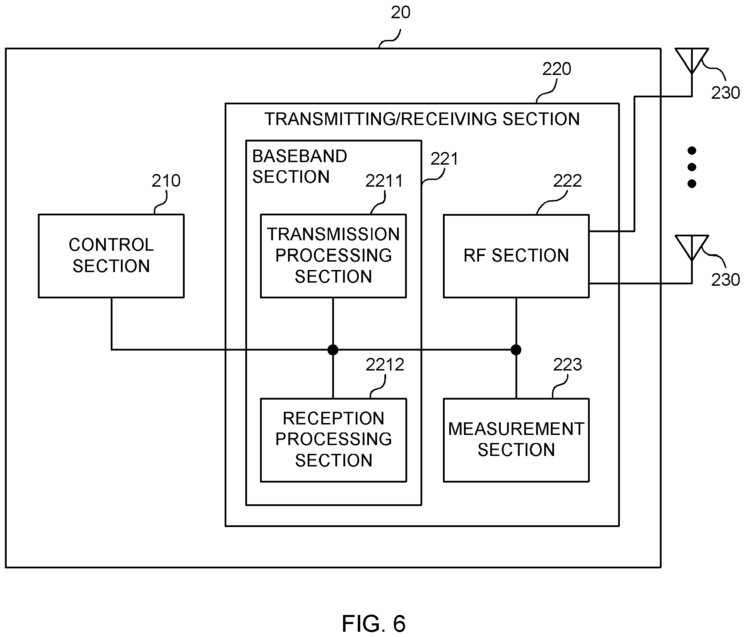

Fig. 6 is a diagram illustrating an example of a configuration of the user terminal according to an embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a base band signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The control section 210 may determine at least one of the Comb configuration and sequence of a measurement reference signal (SRS) based on whether the configured cell frequency is included in a specific frequency range. The transmitting/receiving section 220 may transmit the SRS.

When the frequency of the configured cell is included in the specific frequency range, the control section 210 may assume that the Comb configuration of the SRS is limited to the transmission Comb of the maximum Comb value used in a frequency range other than the specific frequency range (Embodiment 1-1).

When the frequency of the configured cell is included in the specific frequency range, the control section 210 may determine the Comb configuration of the SRS to be a transmission Comb having a Comb value larger than a transmission Comb having a maximum Comb value used in a frequency range other than the specific frequency range (Embodiment 1-2).

When the frequency of the configured cell is included in the specific frequency range, the control section 210 may determine the sequence of the SRS as a sequence different from a sequence used in a frequency range other than the specific frequency range (Embodiment 2-1) .

When the frequency of the configured cell is included in the specific frequency range, the control section 210 may determine the sequence of the SRS based on a correspondence relationship of sequences having fewer groups than a certain number (Embodiment 2-2).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

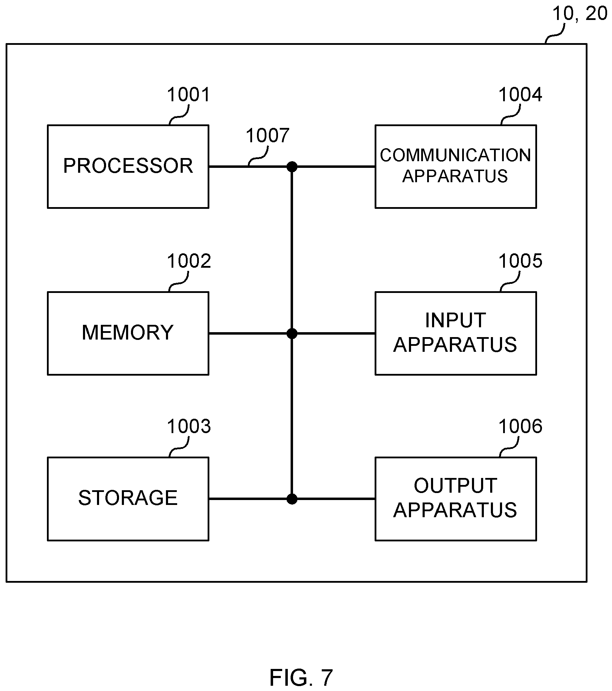

For example, the base station, the user terminal, or the like according to one embodiment of the present disclosure may function as a computer that executes the processing of the radio communication method in the present disclosure. Fig. 7 is a diagram illustrating an example of the hardware configuration of the base station and the user terminal according to an embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is shown, a plurality of processors may be provided. Further, the processing may be executed by one processor, or the processing may be executed by two or more processors simultaneously or sequentially, or by using other methods. Note that the processor 1001 may be implemented with one or more chips.

Each of functions of the base station 10 and the user terminal 20 is, for example, implemented by causing predetermined software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be interchangeable. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that a long TTI (for example, a usual TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Also, an RB may include one or more symbols in the time domain, and may be one slot, one mini slot, one subframe or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a predetermined signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to predetermined values, or represented by using other corresponding information. For example, a radio resource may be specified by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers or a direction from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and the like that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, a MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

Also, software, instructions, information and so on may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology or the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station or a base station subsystem that performs a communication service in this coverage.

In the present disclosure, the terms such as mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Likewise, the user terminals in the present disclosure may be interpreted as base stations. In this case, the base stations 10 may have the functions of the user terminals 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency domain, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Thus, the description of the present disclosure is for the purpose of explaining examples and does not bring any limiting meaning to the invention according to the present disclosure.

## Claims

1. A terminal comprising:
a control section that determines at least one of Comb configuration and sequence of a measurement reference signal (SRS) based on whether a frequency of a configured cell is included in a specific frequency range; and
a transmitting section that transmits the SRS.

2. The terminal according to claim 1, wherein when the frequency of the configured cell is included in the specific frequency range, the control section assumes that the Comb configuration of the SRS is limited to the transmission Comb of the maximum Comb value used in a frequency range other than the specific frequency range.

3. The terminal according to claim 1, wherein when the frequency of the configured cell is included in the specific frequency range, the control section determines the Comb configuration of the SRS to be a transmission Comb having a Comb value larger than a transmission Comb having a maximum Comb value used in a frequency range other than the specific frequency range.

4. The terminal according to any one of claims 1 to 3, wherein when the frequency of the configured cell is included in the specific frequency range, the control section determines the sequence of the SRS as a sequence different from a sequence used in a frequency range other than the specific frequency range.

5. The terminal according to any one of claims 1 to 3, wherein when the frequency of the configured cell is included in the specific frequency range, the control section determines the sequence of the SRS based on a correspondence relationship of sequences having fewer groups than a certain number.

6. A radio communication method for a terminal, comprising:
determining at least one of Comb configuration and sequence of a measurement reference signal (SRS) based on whether a frequency of a cell to be configured is included in a specific frequency range; and
transmitting the SRS.
